# EUROPEAN PATENT SPECIFICATION

(11) **EP 0 436 347 B1**
(45) Date of publication and mention of the grant of the patent: **01.03.1995**
(21) Application number: 90313826.1
(22) Date of filing: 18.12.1990
(51) Int. Cl.: C08G 18/10, C08G 18/30, C08G 18/48, C09J 175/04

(54) **Solvent-free contact adhesive**
Lösungsmittelfreier Kontaktklebstoff
Adhésif de contact sans solvant

(30) Priority: 21.12.1989 GB 8928912
(43) Date of publication of application: 10.07.1991
(73) Proprietor: BOSTIK LIMITED, Leicester LE4 6BW (GB); BOSTIK GMBH, D-61402 Oberursel (DE); BOSTIK FRANCE SA, F-77170 Coubert (FR); BOSTIK AB, S-25229 Helsingborg (SE)
(72) Inventor: Rath, Walter, D-6370 Oberursel 5 (DE); Dzierzynski, Elmar, D-6230 Frankfurt/Man 80 (DE)
(74) Representative: Dubost, Thierry Pierre

(56) References cited:
- EP-A- 0 369 607
- US-A- 4 199 489
- US-A- 4 409 383
- US-A- 4 532 316

## Description

The present invention relates to solvent-free, moisture-curing, polyurethane melt-applied contact adhesive compositions.

A contact adhesive is a specific kind of adhesive which bonds to itself by a diffusion process. The contact adhesive is applied to two surfaces which are to be bonded together and dried. The time of this drying operation is, of course, known as 'drying time'. When the two dry adhesive films are pressed together within the open time, autoadhesion occurs due to diffusion of polymer chains across the adhesive-adhesive interface and good coalescence and initial bond strength are achieved immediately after pressing.

Known contact adhesives are usually solutions or aqueous dispersions of non-reactive polymers. After application to both surfaces to be bonded together, the solvent or water must be evaporated. That requires both time and energy and, additionally safety and environmental precautions have to be considered. Such contact adhesives have the advantages of relatively long open time and high initial bond strength.

It is also known to provide solvent-free adhesives with high initial bond strength which are applied as hot-melts. However these hot-melt materials have the disadvantages of relatively short open time due to fast cooling down after application and limited temperature resistance of the bonds. Reactive hot-melts have good high temperature resistance but their open time is still limited.

It is an object of the present invention to provide polyurethane adhesive compositions which are applied as melts at elevated temperatures, provide contact adhesive properties upon cooling to room temperature and subsequently cure with ambient moisture (taken from the substrate or the ambient atmosphere).

Our copending European patent application 89 303 222.7 describes and claims a quick setting, hot-melt polyurethane adhesive composition comprising a mixture of at least two amorphous polyurethane prepolymers, each polyurethane prepolymer providing a different glass transition point for said composition. Preferably the first polyurethane prepolymer has a glass transition point above room temperature and a second polyurethane prepolymer has a glass transition point below room temperature.

Our copending European patent application EP-A-0 369 607 further describes and claims a quick-setting, hot-melt polyurethane composition comprising a mixture of at least two polyurethane prepolymers and characterised by a first polyether based polyurethane prepolymer having a glass transition point above room temperature and a second polymer or polyurethane prepolymer with a glass transition point below room temperature. This document does not disclose a Tg of the mixture of between -1°C and +2°C.

Polyurethane prepolymers with a glass transition temperature (Tg) above room temperature may be prepared from low molecular weight polyethers (MW less than 1000) and polyisocyanates. Polyurethane prepolymers with Tg below room temperature may be prepared from high molecular weight polyethers, polyesters or polybutadienes and polyisocyanates.

Preferably the second polyurethane prepolymer is also polyether based and prepared from high molecular weight polyether (MW greater than 1000) and polyisocyanates.

According to the present invention we provide a moisture-curing melt-applied polyurethane composition comprising a mixture of at least two polyether based polyurethane prepolymers, characterised in that the first polyether based prepolymer is prepared from a short chain, low molecular weight polyether (MW less than 1000) and polyisocyanates and the second polyether based prepolymer is prepared from a long-chain, high molecular weight polyether (MW greater than 1000) and polyisocyanates and in that the initial glass transition temperature of the mixture is in the range -1°C to +2°C, and that the composition applied as a melt at a temperature between the melting point of the composition and 140°C is effective as a contact adhesive after cooling to room temperature.

The contact adhesive of the invention is solvent free and 100% solid. Normal application is at elevated temperature as a low viscous, good wetting melt to both surfaces by means, for example, of a slot die nozzle or by spinning or spraying. After application, the adhesive solidifies on cooling and no solvents have to be evaporated. Depending upon the substrates, the adhesive shows an open time from about two minutes to about an hour, i.e. bonds can be effected at room temperature from immediately after cooling up to about one hour.

High initial bond strength results from a Tg in the range of -1°C to +2°C. After application, the NCO groups of the prepolymer molecules start to react with water provided by moisture of the substrates or humidity of the air to form a cross-linked network, resulting in increased final bond strength at room temperature as well as at elevated temperatures.

The glass transition temperature increases as the curing reaction proceeds which reduces the mobility of the polymer chains so that poor contact adhesive properties are shown after about one hour.

The polyurethane prepolymer may be prepared according to usual synthesising procedures from polyols and excess polyisocyanate; mixtures of these raw materials can, of course, be used.

The polyols may be linear or branched, and polyether based and preferably linear polypropylene glycols with molecular weights in the range of 300 to 6000, are used, preferably in the range of 400 to 4000. The proportions of the prepolymers are adjusted to give the required glass transition temperature of the mixed composition.

The polyisocyanate, which can be aliphatic or aromatic, is preferably an aromatic diisocyanate such as 4,4'-diphenylmethane diisocyanate, 2,4-toluene diisocyanate or isomers or mixtures, including modified isocyanates.

The prepolymer is preferably prepared at NCO/OH ratios of 1.1 to 2.0, more preferably 1.15 to 1.8, to obtain a glass transition temperature (Tg) between -1°C and +2°C of the uncured material. The reaction is performed at a temperature between the melting point of the composition and 140°C, preferably between 60°C and 120°C.

The reaction product usually is a transparent solid at room temperature and a low viscous liquid at application temperatures between 90°C and 140°C, preferably 100°C to 120°C.

The composition may also, of course, contain conventional ingredients such as catalyst, stabilizers plasticizers, tackifying resins and/or fillers.

In order that the present invention may be better understood, a preferred embodiment of the invention will now be described in greater detail with reference to the following example:

### EXAMPLE

### Preparation of adhesive composition

The prepolymers were synthesized from a mixture of hydroxyl-terminated polypropylene glycol polyethers having different molecular weights and 4,4'-diphenylmethane diisocyanate (MDI) in an NCO/OH ratio of 1.2. 37.5 parts by weight of MDI, molten at 60°C, were stirred under dry nitrogen in a reactor, followed by addition of 0.5 parts of diethyl malonate, 11.5 parts of polypropylene glycol (Mₙ = 4000, OH number: 512 mVal/kg) and 50.5 parts of polypropylene glycol (Mₙ = 400, OH number: 4750 mVal/kg). The reaction temperature was increased stepwise to 120°C and the reaction mixture then maintained at this temperature for about two hours under stirring and reduced pressure until the residual NCO content is 540 mVal/kg.

The prepolymers so prepared, which showed a viscosity of 20 Pa.s at 110°C and a glass transition temperature of +2°C, were filled into moisture-proof containers.

### Use as contact adhesive

The composition prepared according to the Example was tested as a contact adhesive by measurements of Tensile Shear Strength (TSS) on beechwood.

A thin film of the adhesive composition was applied as a melt at 110°C to the surfaces of pairs of beechwood samples. After differing times, the adhesive layers of the beechwood samples were brought together under pressure and thereby joined. The TSS of each joint was then measured as shown in the Table below:

**TABLE**

| Pressure | Press Time | Open Time | Initial TSS (10 min after joining) | Final TSS (7 days after joining) |
|---|---|---|---|---|
| | | 5 min | 0.5 N/mm² | 4.5 N/mm² |
| | | 10 min | 0.52 N/mm² | 3.6 N/mm² |
| 6 bar | 20 sec | 15 min | 0.45 N/mm² | 3.8 N/mm² |
| | | 20 min | 0.53 N/mm² | 3.7 N/mm² |
| | | 25 min | 0.4 N/mm² | 3.8 N/mm² |
| | | 30 min | 0.35 N/mm² | 3.8 N/mm² |

## Claims

1. A moisture-curing melt-applied polyurethane composition comprising a mixture of at least two polyether based polyurethane prepolymers, the first polyether-based prepolymer being prepared from a short-chain, low-molecular weight polyether (MW less than 1000) and polyisocyanates and the second polyether-based prepolymer being prepared from a long-chain, high molecular weight polyether (MW greater than 1000) and polyisocyanates, characterized in that the initial glass transition temperature of the mixture is in the range - 1°C to + 2°C.

2. A moisture-curing melt-applied composition according to claim 1, wherein the polyether-based prepolymers are prepared from linear polypropylene glycols with molecular weights in the range 300 to 6000.

3. A moisture-curing melt-applied composition according to claim 1 or claim 2, wherein the prepolymers are prepared at NCO/OH ratios of 1.1 to 2.0.

4. A moisture-curing melt-applied composition according to any one of claims 1 to 3, further comprising at least one additional ingredient selected from catalysts, stabilizers, plasticizers, tackifying resins and fillers.

5. Application of a polyurethane adhesive composition as melt providing contact adhesive properties, characterized in that the said composition is a polyurethane composition according to one of claims 1 to 4.

## Patentansprüche

1. Feuchtigkeitshärtende, als Schmelze aufgebrachte Polyurethanzusammensetzung, die eine Mischung von mindestens zwei Polyurethanpräpolymeren auf Polyetherbasis umfaßt, wobei das erste Präpolymere auf Polyetherbasis aus einem kurzkettigen, niedermolekularen Polyether (relative Molekülmasse kleiner als 1000) und Polyisocyanaten hergestellt ist und das zweite Präpolymere auf Polyetherbasis aus einem langkettigen, hochmolekularen Polyether (relative Molekülmasse größer als 1000) und Polyisocyanaten hergestellt ist, dadurch gekennzeichnet, daß die anfängliche Glasübergangstemperatur der Mischung im Bereich von -1°C bis +2°C liegt.

2. Feuchtigkeitshärtende, als Schmelze aufgebrachte Zusammensetzung nach Anspruch 1, wobei die Präpolymeren auf Polyetherbasis aus linearen Polypropylenglykolen mit relativen Molekülmassen im Bereich von 300 bis 6000 hergestellt sind.

3. Feuchtigkeitshärtende, als Schmelze aufgebrachte Zusammensetzung nach Anspruch 1 oder 2, wobei die Präpolymeren bei NCO/OH Verhältnissen von 1,1 bis 2,0 hergestellt sind.

4. Feuchtigkeitshärtende, als Schmelze aufgebrachte Zusammensetzung nach einem der Ansprüche 1 bis 3, die weiterhin mindestens einen zusätzlichen Bestandteil, der aus Katalysatoren, Stabilisatoren, Weichmachern, klebrigmachenden Harzen und Füllstoffen ausgewählt ist, umfaßt.

5. Anwendung einer Polyurethanklebstoffzusammensetzung als Schmelze, die Kontaktklebstoffeigenschaften aufweist, dadurch gekennzeichnet, daß die besagte Zusammensetzung eine Polyurethanzusammensetzung nach einem der Ansprüche 1 bis 4 darstellt.

## Revendications

1. Une composition de polyuréthane appliquée à l'état fondu et réticulable à l'humidité comprenant un mélange d'au moins deux prépolymères polyuréthane à base de polyéther, le premier prépolymère à base de polyéther étant préparé à partir d'un polyéther à chaine courte de bas poids moléculaire (Mw inférieur à 1.000) et de polyisocyanates, et le second prépolymère à base de polyéther étant préparé à partir d'un polyéther à chaine longue de haut poids moléculaire (Mw supérieur à 1.000) et de polyisocyanates, caractérisée en ce que la température de transition vitreuse initiale du mélange est dans la gamme de -1°C à +2°C.

2. Une composition appliquée à l'état fondu et réticulable à l'humidité selon la revendication 1, selon laquelle les prépolymères à base de polyéther sont préparés à partir de polypropylène glycols linéaires ayant des poids moléculaires dans la gamme de 300 à 6.000.

3. Une composition appliquée à l'état fondu et réticulable à l'humidité selon la revendication 1 ou la revendication 2, dans laquelle les prépolymères sont préparés à des rapports NCO/OH de 1,1 à 2,0.

4. Une composition appliquée à l'état fondu et réticulable à l'humidité selon l'une quelconque des revendications 1 à 3, comprenant en outre au moins un ingrédient additionnel choisi parmi les catalyseurs, les stabilisants, les plastifiants, les résines tackifiantes et les charges.

5. Application d'une composition polyuréthane adhésive à l'état fondu procurant des propriétés adhésives de contact, caractérisée en ce que ladite composition est une composition de polyuréthane selon l'une des revendications 1 à 4.
